# EUROPEAN PATENT SPECIFICATION

(11) **EP 2 119 269 B1**
(45) Date of publication and mention of the grant of the patent: **15.09.2010**
(21) Application number: 07849032.3
(22) Date of filing: 18.12.2007
(51) Int. Cl.: H04W 88/16, H04W 92/02

(54) **SYSTEM, METHOD, AND GATEWAY FOR INTERFACING PUBLIC SAFETY AND SECURITY (PSS) SYSTEMS AND CELLULAR COMMUNICATION SYSTEMS**
SYSTEM, VERFAHREN UND GATEWAY ZUR ANKOPPLUNG AN PSS-SYSTEMEN (PSS - PUBLIC SAFETY AND SECURITY) UND ZELLULAREN KOMMUNIKATIONSSYSTEMEN
SYSTÈME, PROCÉDÉ ET PASSERELLE PERMETTANT D'INTERFACER DES SYSTÈMES DE PROTECTION ET DE SÉCURITÉ PUBLIQUES (PSS) ET DES SYSTÈMES CELLULAIRES DE COMMUNICATION

(30) Priority: 15.01.2007 US 884942 P; 02.03.2007 US 681389
(43) Date of publication of application: 18.11.2009
(73) Proprietor: Telefonaktiebolaget LM Ericsson (publ), 164 83 Stockholm (SE)
(72) Inventor: SHARP, Douglas, A., Longmont, CO 80504 (US); SETHI, Janardan, Erie, CO 80516 (US)
(74) Representative: HOFFMANN EITLE
(86) International application number: PCT/IB2007/004012
(87) International publication number: WO 2008/087482

(56) References cited:
- WO-A-2006/107674
- US-A- 5 987 331
- US-A- 6 094 578

## Description

### BACKGROUND OF THE INVENTION

This invention relates to radio telecommunication systems. More particularly, and not by way of limitation, the invention is directed to a system, method, and gateway for enabling users of Public Safety and Security (PSS) systems to communicate utilizing cellular communication systems while maintaining complete service interoperability with other PSS systems, without accessing or routing calls through the Public Switched Telephone Network (PSTN).

Most PSS standards (for example: TETRA and APCO Project 25) require interoperability with other PSS systems. A high importance is placed on being able to communicate with a neighboring Public Safety agency or organization when responding to large scale emergencies or disaster scenarios. Currently the TETRA and APCO Project 25 standards bodies are working to define interoperability between PSS users by defining a common air interface and a signaling protocol that would provide interoperability between users operating under the same PSS technology. Proposed implementations provide a significantly reduced subset of features and service when interoperating between PSS systems or technologies.

Currently, no method exists for providing interoperability between PSS systems (specifically TETRA and APCO) and standardized cellular systems (such as GSM, EDGE, WCDMA, HSPA, and the like) other than circuit-switched voice calling routed through the PSTN.

US 5,987,331 describes a communication system to communications system gateway method and apparatus. Call requests are directed from a sourcing communication unit in a first communication system to a gateway, which translates identity and call type information from the first system to at least one other system. A gateway requests radio frequency resources from each system to support a call. In an example, a system 1, system 2 and system 3 are operably linked through a gateway.

WO 2006/107674 A2 describes a radio gateway system and method for interfacing a radio system and an IP network. The system comprises a plurality of gateways, each gateway including a radio interface port, a protocol converter and a packet interface. The gateways convert audio and signalling from the radio system into packet signals in a generic protocol.

US 6,094,578 describes a gateway unit which acts to provide interoperability between disparate mobile communications networks. A gateway unit provides necessary protocol conversions between the different mobile networks. The gateway unit can be a stand-alone unit or co-located with a mobile switching center.

### BRIEF SUMMARY OF THE INVENTION

What is needed in the art is a system, method, and gateway for enabling users of PSS systems to communicate utilizing cellular communication systems while maintaining complete service interoperability with other PSS systems, without accessing or routing calls through the PSTN. The present invention provides such a system, method, and gateway.

In particular, this is achieved by the independent claims. Advantageous embodiments are described in the dependent claims.

The present invention enables public safety users to utilize cellular technology while maintaining complete, direct, service interoperability with users equipped with PSS technology, without accessing or routing the call through the PSTN. The invention translates control signaling, addressing information, voice traffic, and data traffic to allow seamless communication between systems utilizing different standards and protocols. The invention also provides a method to seamlessly integrate voice, data messaging, and data services through intelligent routing between Dispatch Center consoles and wireless terminals irrespective of serving system.

Another aspect provides continuous interoperability between existing PSS systems during periods when the PSS systems may temporarily lack their normal interoperability due to one or more of the PSS systems being upgraded to new standards. Although TETRA and APCO standards require all agencies or users within a given geographic area to simultaneously upgrade their equipment to a new standard in order to retain interoperability, in practice there are transition periods when the PSS systems temporarily lack such interoperability. The invention provides an interoperability bridge during these transition periods.

Thus, one aspect is directed to a gateway for interfacing a PSS communication system with a cellular communication system. The gateway includes a PSS system interface for interfacing the gateway with the PSS communication system; a cellular interface for interfacing the gateway with the cellular communication system; and a presence and identity mapping unit for mapping a PSS user identity utilized in the PSS communication system to a cellular user identity utilized in the cellular communication system. The gateway also includes call processing means for establishing a session between the PSS communication system and a PSS user operating in the cellular communication system utilizing the mapped cellular user identity; and a transcoder for converting between cellular protocols and PSS protocols.

Another aspect is directed to a method of interfacing a PSS communication system with a cellular communication system through a gateway. The method includes the steps of interfacing the gateway with the PSS communication system; interfacing the gateway with the cellular communication system; and mapping by the gateway, a PSS user identity utilized in the PSS communication system to a cellular user identity utilized in the cellular communication system. The method also includes establishing by the gateway, a session between the PSS communication system and a PSS user operating in the cellular communication system utilizing the mapped cellular user identity; and transporting voice traffic between the PSS communication system and the PSS user operating in the cellular communication system, wherein the gateway converts between PSS and cellular voice coding protocols. The method may also include transporting data between the PSS communication system and the PSS user operating in the cellular communication system, wherein the gateway converts between PSS data protocols and cellular data protocols.

Another aspect is directed to a system for providing seamless communications to PSS users operating between a PSS communication network and a cellular communication network irrespective of access technology or switching method. The system includes a PSS communication network; a cellular communication network; and a gateway for interfacing the PSS communication network with the cellular communication network. The gateway includes a PSS interface for interfacing the gateway with the PSS communication network; a cellular interface for interfacing the gateway with the cellular communication network; and a presence and identity mapping unit for mapping a PSS user identity utilized in the PSS communication network to a cellular user identity utilized in the cellular communication network. The gateway also includes call processing means for establishing a session between the PSS communication network and a PSS user operating in the cellular communication network utilizing the mapped cellular user identity; and a transcoder for converting between cellular protocols and PSS protocols.

### BRIEF DESCRIPTION OF THE SEVERAL VIEWS OF THE DRAWING

In the following, the essential features of the invention will be described in detail by showing preferred embodiments, with reference to the attached figures in which:
FIG. 1 is a simplified block diagram of an exemplary embodiment of the apparatus of the present invention;
FIG. 2 is a simplified block diagram of an exemplary interfacing mechanism when utilizing the present invention to provide interoperability between a cellular network and a legacy PSS system;
FIG. 3 is a simplified block diagram of an exemplary interfacing mechanism when utilizing the present invention to provide interoperability between a cellular core network and a next generation PSS core network;
FIGS. 4A-4B are portions of an exemplary call flow diagram illustrating how a user on the Public Cellular Network receives a group call originating on the PSS Network;
FIGS. 5A-5B are portions of an exemplary call flow diagram illustrating how a user on the Public Cellular Network can utilize the present invention to initiate a data session with a PSS data server, and then send and receive information as desired;
FIGS. 6A-6B are portions of an exemplary call flow diagram illustrating how a user on the Public Cellular Network can utilize the present invention to scan between Group Calls active on the PSS Network;
FIG. 7 is an exemplary call flow diagram illustrating a Message Replay feature provided by the present invention;
FIG. 8 is an exemplary call flow diagram illustrating a Text Acknowledge feature provided by the present invention; and
FIG. 9 is an exemplary call flow diagram illustrating a UE Forwarding feature provided by the present invention.

### DETAILED DESCRIPTION OF THE INVENTION

In one embodiment, the present invention is a PSS Gateway-to-Cellular (PGC) gateway 11, which provides seamless interoperability between dissimilar communication systems irrespective of access technology or switching method. This allows a user on the public safety network to communicate with a user on the cellular network using either circuit-switched or packet-switched technology. Current PSS networks and cellular networks only support roaming between systems utilizing the same technology. The PGC gateway provides a seamless connection between these networks utilizing different technology.

In one embodiment, the invention enables users of PSS systems to communicate utilizing cellular communication systems while maintaining complete service interoperability with other PSS systems, without accessing or routing calls through the PSTN. The invention thus provides a range extension beyond the physical boundaries of a privately deployed PSS system. Users are provided seamless communication when outside the private PSS network coverage area by utilizing the PGC gateway 11 and roaming on the public cellular Push-to-Talk over Cellular (PoC) network.

In addition, the PGC gateway 11 provides for smart routing between multiple PSS handsets when a user is equipped with multiple technology handsets. The PGC gateway supports users equipped with multiple handsets each capable of operation on a single technology domain. For example, a user may carry multiple handsets that appear to the system as a single user. The PGC gateway also supports users with dual-technology handsets capable of operating on multiple access domains one at a time (PSS and cellular operation in a single package). In this case an intelligent routing algorithm intelligently routes calls utilizing PGC User Identity registration information. The PGC gateway maps the user identity on the various respective networks, and intelligently routes calls based upon programmed rules and configured parameters. Additionally, voice packets are sent to users operating across the PGC gateway by utilizing store-and-forward technology. This method eliminates missing the beginning of a transmission due to slower call setup on the far-end or terminating network.

The PGC gateway facilitates call routing in several ways. First, call routing for users calling across the technology domains is routed through the PGC gateway, for both individual calling and group calling involving group members. Second, call routing for users equipped with multiple terminals, each capable of operating on a single technology domain, is routed through the PGC gateway. Individual point-to-point and group calling are facilitated through the PGC gateway using an intelligent algorithm. Typically the call is routed through the PSS system for fastest call setup, but may also be routed based upon registration information, system administrator preferred settings, fastest call setup time, parallel/multi-system paging, load balancing, or overload detection.

PSS systems do not require an originating handset to provide confirmation that others are listening to a call due to the potential larger number of listeners. PSS systems only provide a "go ahead beep" indicating that system resources are available and setup to transmit the group call. For example, the PGC gateway can route a group call to two handsets simultaneously, or to a single handset, or may route the call to the PSS network only (faster network) based upon the registration status of the PGC Identity.

The PGC gateway 11 interfaces with external PSS data servers and gateways, allowing real-time streaming text services to be sent to users regardless of serving network. These external PSS data servers may include a 9-1-1 call center server, dispatch consoles, or Computer Aided Dispatch (CAD) logging computers, which are widely implemented in dispatch centers today. The PGC gateway routes traffic to the end user (another UE and/or Dispatch Console) regardless of technology or switching method. For example, a dispatcher may initially assign a public service call to an officer using voice, receive a reply from the officer using text or a Macro Function reply, and then forward additional information regarding the call using PS/CS data. The PGC gateway routes the traffic to the various users and/or console ports to provide a seamless communications session utilizing the most efficient mode of communication.

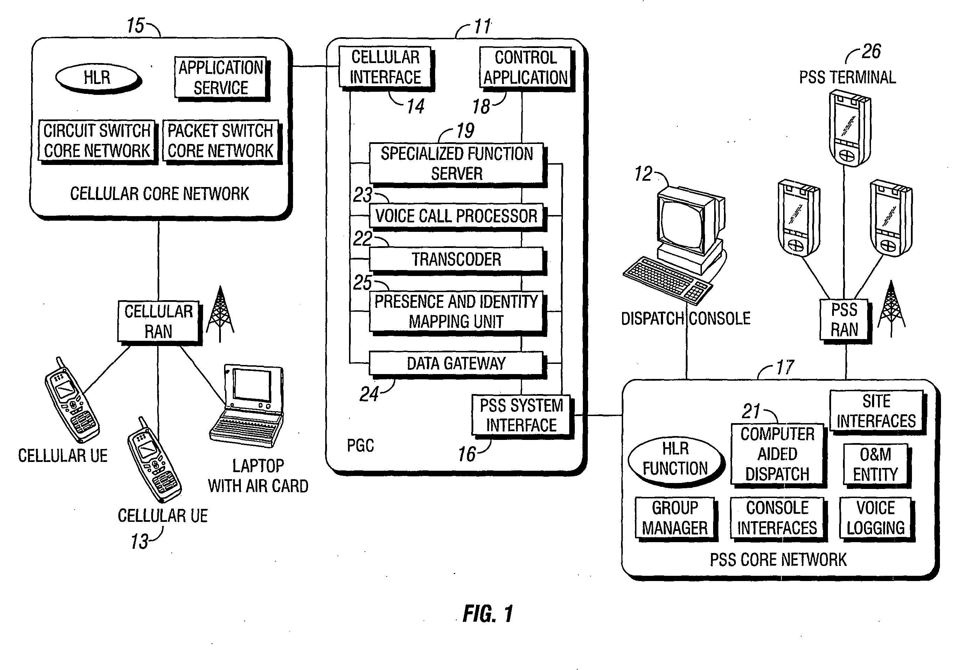

FIG. 1 is a simplified block diagram of an embodiment of the apparatus of the present invention. The PGC gateway 11 translates control signaling, addressing information, voice traffic, and data traffic to provide seamless communication between systems utilizing different standards and protocols. The PGC gateway also seamlessly integrates voice, data messaging, and data services through intelligent routing between Dispatch Center consoles 12 and wireless terminals 13 irrespective of serving system technologies. These technologies include, but are not limited to: Public Safety Trunking (PST) and cellular systems.

The PGC gateway 11 facilitates a seamless communications experience to PSS users operating between PSS and cellular networks irrespective of access technology or switching method. This allows a user on the PSS network to communicate with a user on the cellular network using either circuit-switched or packet-switched technology. Current PSS and cellular networks only support roaming between PSS and cellular systems utilizing the same technology. The PGC gateway provides a seamless connection between these systems without routing calls through the PSTN. The direct connection implemented by the PGC gateway improves call setup time, and supports direct PoC/PTT connectivity between PSS (TETRA and APCO) and cellular systems.

A cellular interface 14 provides an interface between the PGC gateway 11 and an external cellular core network 15. The cellular interface provides all translations between the PGC gateway and the cellular network. The cellular interface provides the interface between the PGC gateway and the public cellular network components using the same signaling and protocols as a traditional cellular network. These typical cellular components include, for example, a home location register (HLR), mobile switching center (MSC), visitor location register (VLR), Media Gateway, and/or IP Multimedia Subsystem (IMS) core components.

Likewise, a PSS interface 16 provides an interface between the PGC gateway 11 and an external PSS core network 17. The PSS interface provides all translations between the PGC gateway and the PSS network. The PSS interface communicates with the PSS Network using the same signaling and protocols as a traditional PSS site. This interface can be either analog or digital depending upon the PSS Network implementation.

A control application 18 provides overall control and processing for the PGC gateway 11, coordinating the activities and various functions within the PGC gateway.

A specialized function server 19 hosts a number of functions to interface and integrate between the PGC 11 and external networks 15 and 17. The server may simultaneously execute a number of applications, limited only by server memory and processor capability. One such application, referred to herein as a Macro Function, allows a series of functions, commands, or instructions to be executed in a predefined order after being triggered by placing a call to a pre-defined special dialing number. The trigger may be either a voice or data call. After being triggered, the Macro Function executes the pre-defined commands associated with that particular number. The Macro Function allows a data message to easily and quickly replace a voice message for pre-defined scenarios.

A first exemplary use case for the Macro Function is the Speed Dial Acknowledge case. In this case, "*9" is defined as the message that allows a Police Officer to acknowledge to a Dispatch Center Dispatcher that the officer is responding to a public safety call. The Police Officer places a call to *9, causing the Macro Function to execute the following steps:
1) Send a data message to the dispatcher indicating that the officer (including the unit number or officer number identifier) is en route to the call. If the officer's UE is GPS enabled, position location information may also be sent, thereby providing the dispatcher with information for estimating an approximate arrival time at the scene.
2) Send a similar message to the Computer Aided Dispatch (CAD) computer 21 for archive purposes.
3) Send a disconnect message back to the originating unit indicating the macro has been executed and the information has been sent.
4) Send a text message back to the responding officer with any additional background information from the CAD system regarding the particular call.

A second exemplary use case for the Macro Function is the Registration and Call Forwarding case. In this case, "*3" is defined as the message that manually registers a user's "PGC User Identity" with the PGC regardless of the originating radio identity. This allows a PSS user to "forward" calls to another UE within the network. The PGC performs the mapping and routing to accomplish this task. Situations where this might be used are:
1) When a UE specific to an officer is lost or damaged, the officer can use a temporary replacement radio without requiring the officer's identity to be pre-programmed into the replacement radio.
2) When police vehicles in a motor pool contain pre-mounted UEs within the vehicles, an officer can manually register the UE in a particular vehicle to the officer's identity. In this case, the dispatch console displays to the dispatcher, the officer's identity rather than the identity of the motor pool vehicle. The PGC would again perform this identity translation.

Another application executed by the specialized function server 19 is a streaming data function. This function streams data from the PSS Computer Aided Dispatch (CAD) system 21 (if present in the PSS system) to a cellular based UE 13. This allows the radio dispatcher, or 911 Call Center dispatcher, to share information with the PSS user operating on the cellular system. As new information is entered into the CAD system, it is relayed through the streaming data function in near real-time to the PSS user operating on the public cellular system.

A transcoder 22 converts between different voice and data protocols used on the various systems connected through the PGC 11. This is required because PSS and cellular systems utilize different voice and data protocols within their respective systems. The transcoder converts between cellular and PSS voice coding (vocoder) technologies.

A voice call processor 23 works closely with the transcoder 22. While the transcoder converts between cellular and PSS vocoder technologies, the voice call processor implements some new and unique functions within the PGC. New functions within the voice call processor include:
- Voice packet store and forward technology to compensate for wireless networks with longer call-setup times. The voice call processor buffers incoming voice frames from a faster call-setup network, and then forwards the frames to the user after the slower call-setup network resources have been established.
- Message replay. A number of recently transmitted voice transmissions are stored in the PGC. The number of past transmissions stored is user configurable. The user may request that these recent transmissions be re-sent upon demand, thereby reducing the number of times a Dispatcher is asked to repeat a transmission.
- Increased speed group scanning functionality. By controlling the flow of voice traffic frames being sent to the end user, the PGC may switch the voice stream for a user from a lower-priority to a higher-priority voice group without incurring additional call release and call-setup delays.
- Voice compression within the time domain to allow voice traffic being passed over a slower-setup communication system to "catch-up" during the replay process at the destination UE. This function essentially speeds up the mouth-to-ear times when traversing networks.

A data gateway 24 provides an interface between PSS and cellular data systems. The data gateway provides any format or protocol translation between the PSS WAN, PSS, and cellular data protocols. A typical data connection is between a cellular phone (UE) 13 and the PSS Computer Aided Dispatch (CAD) system 21.

A presence and identity mapping unit 25 creates, defines, and stores a universal "PGC User Identity" for all PSS users. This universal identity has a corresponding identity in the cellular domain (for example, SIP identity), and also an identity in the PSS domain (a local and private identifier). For example, the system administrator may define a PGC User Identity (for example "Fred") that has a mapping to a PSS Identity (for example unit "314159") and to a PoC/SIP Identity (for example "fred@pssdomain"). The presence and identity mapping unit 25 maps these two identities to provide seamless addressing of users across multiple systems operating within different standards. The PGC routes calls to the appropriate network based upon a set of PGC User Identity programmed rules.

The presence and identity mapping unit 25 also creates, defines, and stores a universal "PGC Group Identity" for all groups within the networks interconnected by the PGC gateway. This universal identity has a corresponding identity in the Public Cellular domain (for example PoC Group), and also an identity in the Public Safety domain (Group Identifier). The invention maps these two group identities to provide seamless routing of group call traffic to multiple users across multiple systems operating under different standards.

The presence and identity mapping unit 25 also includes a PGC presence application, which interfaces with the standard entities in the cellular network and the PSS network that maintains presence/registration information. For example, the PGC presence application may interface with the HLR for GSM networks, the presence server for PoC networks, and the location register for PSS networks. The PGC presence application gathers and maintains information regarding the status of wireless terminals 13 in the cellular network and PSS terminals 26 in the PSS network. This implementation allows the wireless users to register with their serving wireless network using the standardized method of registration defined for that technology, and does not require additional registration with the PGC gateway.

The PGC gateway 11 supports group calling PTT services across the PSS and cellular domains. The PGC gateway determines the location of all terminals involved in the group call, and routes the voice traffic to the appropriate network. A transcoding unit 16 transcodes the digital voice frames when communicating between systems utilizing different voice coding technologies or different standards.

The PGC gateway 11 also enables a user traveling outside his home combined PSS and cellular service areas to place and receive calls while roaming on any public cellular network that is not directly connected to the PGC gateway. This assumes a valid roaming agreement exists, and data connectivity has been established between the two public networks. The PGC gateway provides routing to deliver traffic to the user regardless of serving system.

The PGC gateway 11 supports users equipped with multiple handsets, which are each capable of operating on a single technology domain. For example: One user carries multiple handsets that appear to the system as a single user. The PGC gateway is also capable of supporting users with handsets capable of operating on multiple access domains (PSS and cellular operation in a single package), one at a time. In this case an intelligent routing algorithm is utilized.

The PGC gateway 11 facilitates call routing as follows:
Call routing for users calling across the technology domains, both for individuals and for group calling, is routed through the PGC gateway. The following are some of the methods that enable call routing between the networks to be routed via the PGC gateway.

In one embodiment, the PSS technology domain users are assigned a block of numbers in the cellular system numbering plan, and the cellular system is configured to route terminations in this block of numbers to the PGC gateway. The PGC gateway then acts as a gateway MSC. In another embodiment, the PGC then re-routes (forwards) the call setup back to the cellular system, modifying the destination identity to a temporary identity that the cellular system can route to the PSS user in the cellular network.

In another embodiment for routing PSS calls in the cellular system, a separate SIP domain is used in the SIP address for the PSS technology domain users, and the cellular system is configured to return the address of the PGC gateway when performing a domain lookup on this domain. The PGC gateway may then re-route the call setup for these users back to the cellular system, modifying the destination identity to a temporary identity that the cellular system can route to the PSS user in the cellular network.

In the PSS domain, the PGC gateway 11 interfaces with the PSS network 17 acting as a PSS site that can terminate calls to and originate calls from PSS cellular technology users. The PGC gateway uses this PSS site interface to notify the PSS network about PSS cellular users it hosts/terminates. This interaction causes the PSS network to route group and individual calls via the PGC gateway and to send notifications about group and individual calls via the PGC gateway.

Call routing for users equipped with multiple terminals, each capable of operating on a single technology domain:
Individual point-to-point and group calling may be facilitated through the PGC gateway using an intelligent algorithm. Typically the call would be routed through the PSS system for fastest call setup, but could also be routed based upon registration information, system administrator preferred settings, fastest call setup time, parallel/multi-system paging, load balancing, or overload detection.

PSS systems do not require an originating handset to provide confirmation that others are listening to a call due to the potential larger number of listeners. PSS systems only provide a "go ahead beep" indicating that system resources are available and set up to transmit the group call. For example, the PGC gateway may route the group call to both handsets simultaneously, or a single handset, or route the call only to the PSS network (faster network) based upon the registration status of the PGC Identity.

The PGC gateway 11 performs call routing for users equipped with dual technology handsets based upon the PGC User Identity registration information.

Voice packet store-and-forward technology is implemented within the PGC gateway to compensate for wireless networks with longer call setup times. The PGC gateway is capable of buffering incoming voice frames from a faster call-setup network, and then forward to the user after the slower call-setup network resources have been established.

The PGC gateway may store several recently transmitted voice transmissions and provide message replay services. The number of past transmissions stored is configurable by the user. The user may request that these recent transmissions be re-sent upon demand, thereby reducing the number of times a Dispatcher is asked to repeat her last transmission.

The PGC gateway supports higher speed group scanning functionality by controlling the flow of voice traffic frames being sent to the end user. The PGC gateway may switch the voice stream for a user from a lower-priority to a higher-priority voice group without incurring additional call release and call-setup delays.

The PGC gateway 11 may also perform voice compression in the time domain, allowing voice traffic being passed over a slower setup communication system to "catch-up" during the replay process at the destination UE. This function essentially speeds up the mouth-to-ear times when traversing networks.

The PGC gateway 11 interfaces with external PSS data servers and gateways, enabling real-time streaming text services to be sent to users regardless of serving network. These external PSS data servers may include, for example, a 9-1-1 call center server, dispatch consoles, or Computer Aided Dispatch (CAD) logging computers which are widely implemented in dispatch centers today. The PGC gateway routes traffic to the end user (another UE and/or Dispatch Consoles) regardless of technology or switching method. For example, a dispatcher may initially assign a public service call to an officer using voice technology, and then receive a reply from the officer using text or a Macro Function reply. The PGC gateway may then forward additional information regarding the call using PS/CS data. The PGC gateway routes the traffic to the various users and/or console ports to provide a seamless communications session utilizing the most efficient mode of communication.

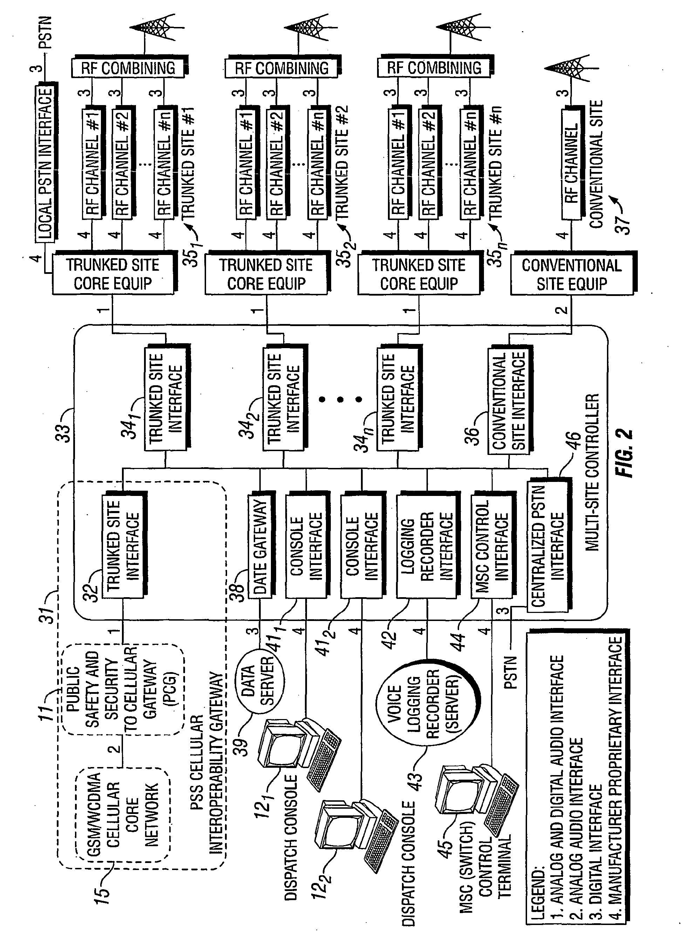

FIG. 2 is a simplified block diagram of an exemplary interfacing mechanism when utilizing the present invention to provide interoperability between a cellular network 15 and a legacy PSS system. Essentially, legacy PSS systems are those systems that use technology prior to the TETRA and P25 standards, i.e., older analog trunking or digital trunking systems. There are still numerous legacy PSS systems operating around the world today. Examples of these systems include, but are not limited to M/A Com EDACS, Motorola SmartNet and SmartZone, and Conventional Repeater systems. Operators of these systems desire interoperability with other PSS users outside of their system, but lack a migration path without a complete change of equipment and infrastructure. Providing connectivity between existing equipment and the public cellular network would provide additional data services, non-mission critical voice services, and interoperability. The PGC gateway provides this interface by connecting to a site interface added to the existing switching equipment at the legacy PSS system.

A PSS cellular interoperability gateway 31 is formed from the cellular core network 15, the PGC gateway 11, an a trunked site interface 32. The trunked site interface may be a component in a multi-site controller 33, which connects to multiple PSS sites. The trunked site interface 32 connects to trunked site interfaces 34₁ through 34ₙ, which interface with PSS trunked site #1 35₁ through PSS trunked site #n 35ₙ. A conventional site interface 36 interfaces with PSS conventional site 37.

The multi-site controller 33 may also include a data gateway 38, which connects to a data server 39. Console interfaces 41₁ and 41₂ interface with dispatch consoles 12₁ and 12₂, respectively. A logging recorder interface 42 interfaces with a voice logging recorder (server) 43. An MSC control interface 44 interfaces with an MSC (switch) control terminal 45. Finally, a centralized PSTN interface 46 provides a digital interface to the PSTN.

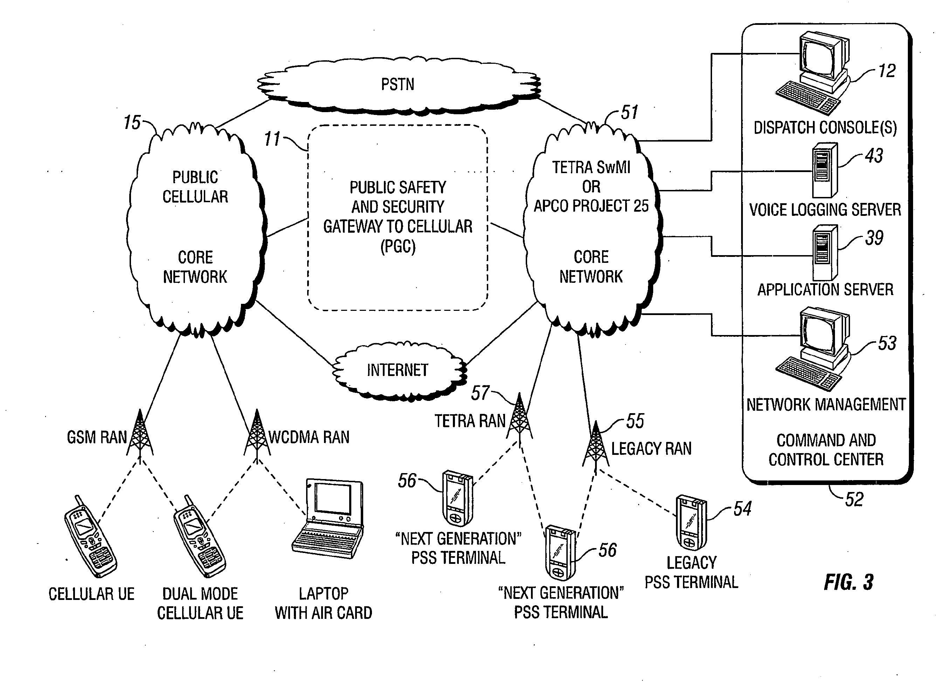

FIG. 3 is a simplified block diagram of an exemplary interfacing mechanism when utilizing the present invention to provide interoperability between a cellular core network 15 and a next generation PSS core network 51. The next generation PSS core network may be, for example, a TETRA SWml or APCO Project 25 core network, both of which utilize digital modulation and signaling. The main focus of these two standards is interoperability with other PSS users outside of their system. But interoperability requires all PSS users to abandon their existing systems and simultaneously install "next generation" equipment. A regional, statewide or countrywide change of all PSS systems is impractical.

The next generation PSS core network 51 connects to a command and control center 52, which may include dispatch consoles 12, a voice logging server 43, an application/data server 39, and a network management system 53. Legacy PSS terminals 54 may access the next generation PSS core network through a legacy RAN 55 while next generation PSS terminals 56 may access the next generation PSS core network through a next generation (for example TETRA) RAN 57.

The PGC gateway 11 provides connectivity between the existing legacy RAN 55, the next generation RAN 57, and the public cellular network 15. In this embodiment, the PGC gateway 11 may interface with the TETRA or APCO P25 core network 51 exclusively in the digital or IP domain. The PGC gateway provides interoperability, additional data services, and non-mission critical voice services at a significantly reduced cost to the PSS Agency.

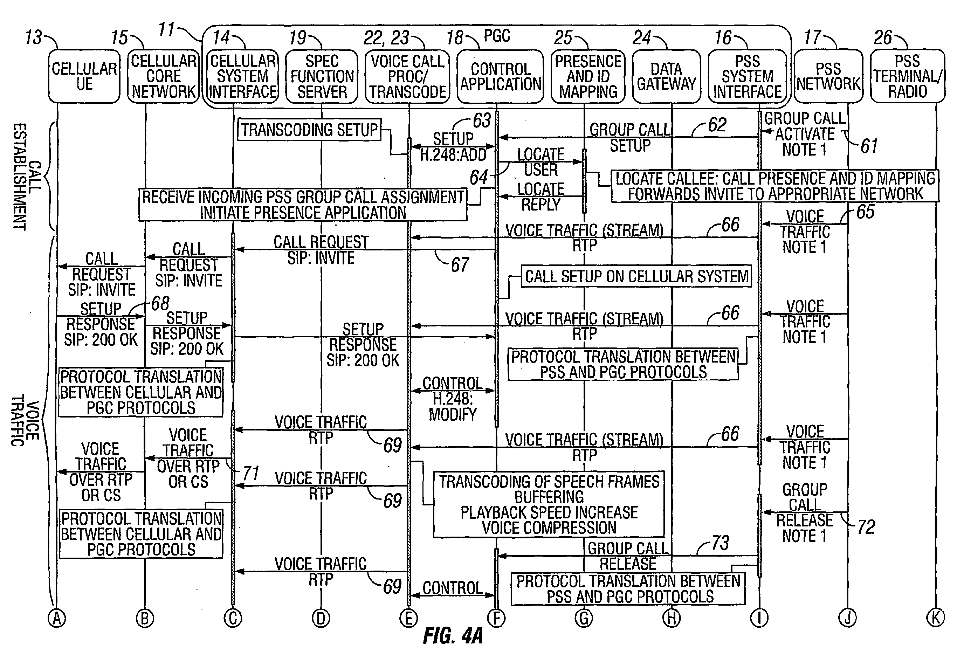

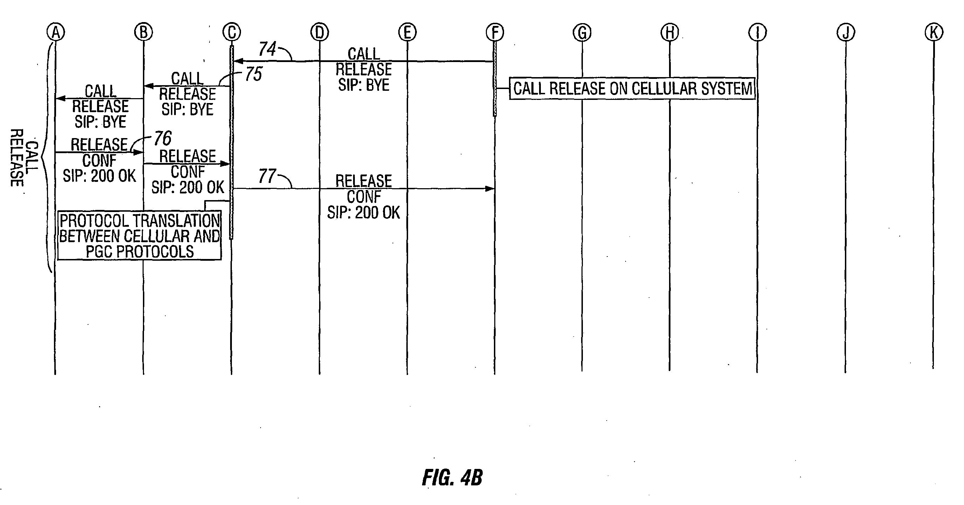

FIGS. 4-9 are exemplary call flow diagrams further illustrating the functionality of the PGC gateway 11. Wherever possible, publicly defined standards and protocols are shown between the PGC gateway and external systems. This includes the PGC-Public Cellular Network, and the PGC-PSS Network interfaces. The PGC gateway is not limited to these specific standards, and they are included only as examples of one possible implementation.

FIGS. 4A-4B are portions of an exemplary call flow diagram illustrating how a user on the Public Cellular Network receives a group call originating on the PSS Network. The PGC allows group calling between the PSS and Cellular Networks. Referring to FIG. 4A, the PSS Network 17 sends a Group Call Activate message 61 to the PGC gateway 11. The message is received in the PSS system interface 16, which performs protocol translations between PSS and PGC protocols, and sends a Group Call Setup message 62 to the Control Application 18. The Control Application sends a Setup message 63 to the Voice Call Processor/Transcoder 22/23 to set up transcoding. The Control Application also sends a location query 64 to the Presence and ID Mapping Unit 25 to determine the location of the called UE 13.

When the PSS Network 17 sends voice traffic 65 to the PGC gateway 11, the PSS system interface 16 sends a voice traffic stream 66 to the Control Application 18 and the Voice Call Processor/Transcoder 22/23 using, for example, the Realtime Transport Protocol (RTP). The Control Application sends a Call Request 67 to the Cellular system interface 14 using, for example, a SIP Invite message. The Cellular system interface performs protocol translations between cellular and PGC protocols. The Call Request is forwarded to the UE 13, which returns a Setup Response 68 using, for example, a SIP 200 OK message. The Voice Call Processor/Transcoder performs transcoding of speech frames, buffering, playback speed control, and voice compression and forwards the voice traffic stream to the Cellular system interface 14 at 69. At 71, the voice traffic is forwarded to the Cellular Core Network 15 and the UE 13 using RTP or circuit-switched protocols. This continues throughout the duration of the UE's participation in the group call.

When the group call ends, the PSS Network 17 sends a Group Call Release message 72 to the PGC gateway 11. The message is received in the PSS system interface 16, which sends a Group Call Release message 73 to the Control Application 18. The process then moves to FIG. 4B, where the Control. Application sends a Call Release message 74 to the Cellular system interface 14 using, for example, a SIP BYE message. At 75, the Call Release message is forwarded to the Cellular Core Network 15 and the UE 13, which returns a Release Confirm message 76 using, for example, a SIP 200 OK message. The Cellular system interface forwards the Release Confirm message at 77 to the Control Application, which completes the release of the group call.

A similar exemplary call flow procedure may be illustrated showing how a user on the PSS network receives a group call originating on the Public Cellular Network. Such a call flow procedure is not shown since it would be understood by a person skilled in the art having studied the disclosure herein.

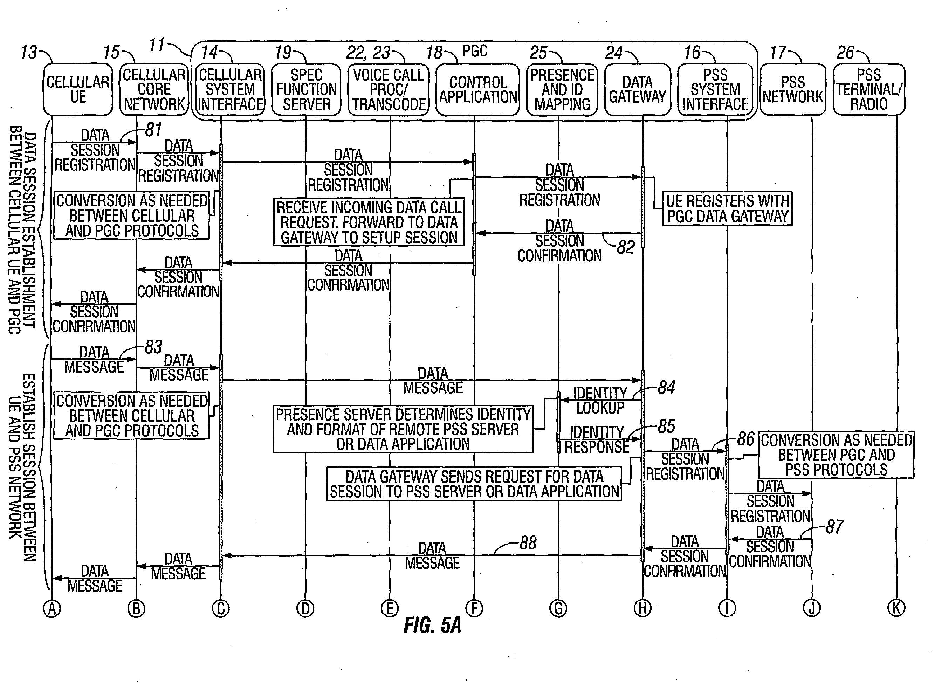

FIGS. 5A-5B are portions of an exemplary call flow diagram illustrating how a user on the Public Cellular Network can utilize the present invention to initiate a data session with a PSS data server, and then send and receive information as desired. The PGC gateway 11 provides high speed data services for PSS users served on a Public Cellular Network. The information transferred may be either a one-time data transfer or streaming data from a server (for example, a Computer Aided Dispatch system) operating within the PSS system.

In a first phase, a data session is established between the Cellular UE 13 and the PGC gateway 11. Referring to FIG. 5A, the Cellular UE sends a Data Session Registration message 81 to the Cellular Core Network 15. The Registration message is forwarded to the PGC gateway where the UE registers with the Data Gateway 24. The Data Gateway then returns a Data Session Confirmation message 82 to the Cellular UE. In a next phase, a data session is established between the Cellular UE and the PSS Network 17. The Cellular UE sends a data message 83 to the Cellular Core Network 15. The data message is forwarded to the Data Gateway 24 in the PGC gateway. At 84, the Data Gateway performs an identity lookup with the Presence and ID Mapping Unit 25, and receives an identity response 85 which includes the identity and format of a remote PSS server or data application.

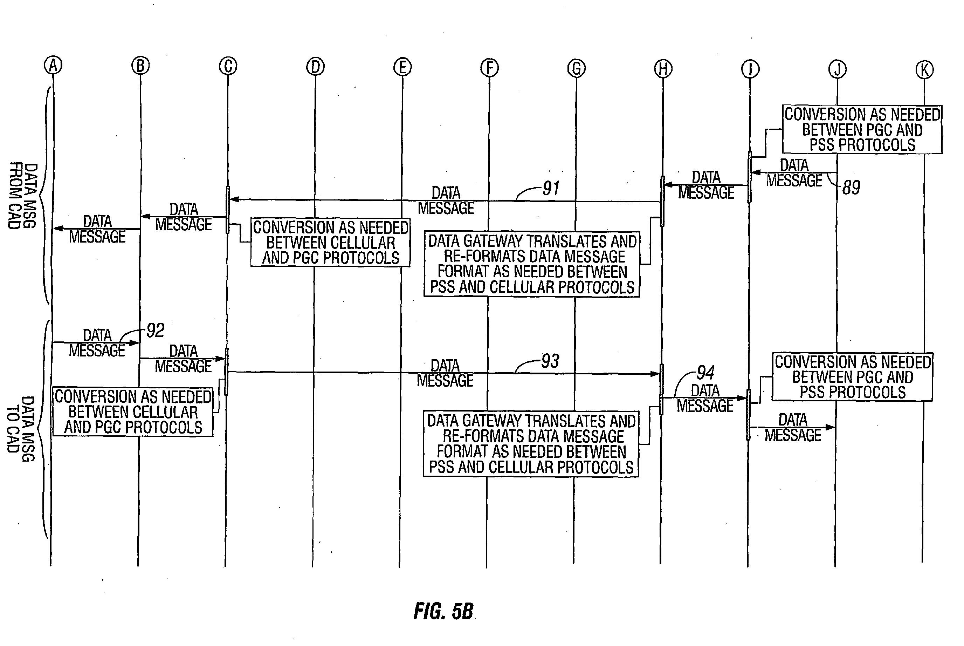

The Data Gateway 24 then sends a Data Session Registration message 86 through the PSS system interface 16 to the PSS Network 17, and receives a Data Session Confirmation message 87 in response. The Data Gateway then sends a data message 88 to the Cellular UE 13 via the Cellular system interface 14 and the Cellular Core Network 15. The process then moves to FIG. 5B. When a data message 89 is received from the PSS Network (for example, from the Computer Aided Dispatch system 21, the Data Gateway translates and re-formats the data message between PSS and Cellular protocols. The Data Gateway then forwards the translated data message 91 to the Cellular UE via the Cellular system interface and the Cellular Core Network. When the Cellular UE sends a data message 92 to the Computer Aided Dispatch system, the Cellular system interface converts the data message between Cellular and PGC protocols and sends the converted message 93 to the Data Gateway. The Data Gateway translates and re-formats the data message between Cellular and PSS protocols, and forwards the translated data message 94 to the Computer Aided Dispatch system in the PSS Network via the PSS system interface 16.

As would be clear to those skilled in the art, a similar process may be performed enabling a user on the PSS network to utilize the present invention to initiate a data session with a Public Cellular Network data server, and then send and receive information as desired. Additionally, a dispatcher on the PSS network can initiate a session to "push" data to a user on the Public Cellular Network.

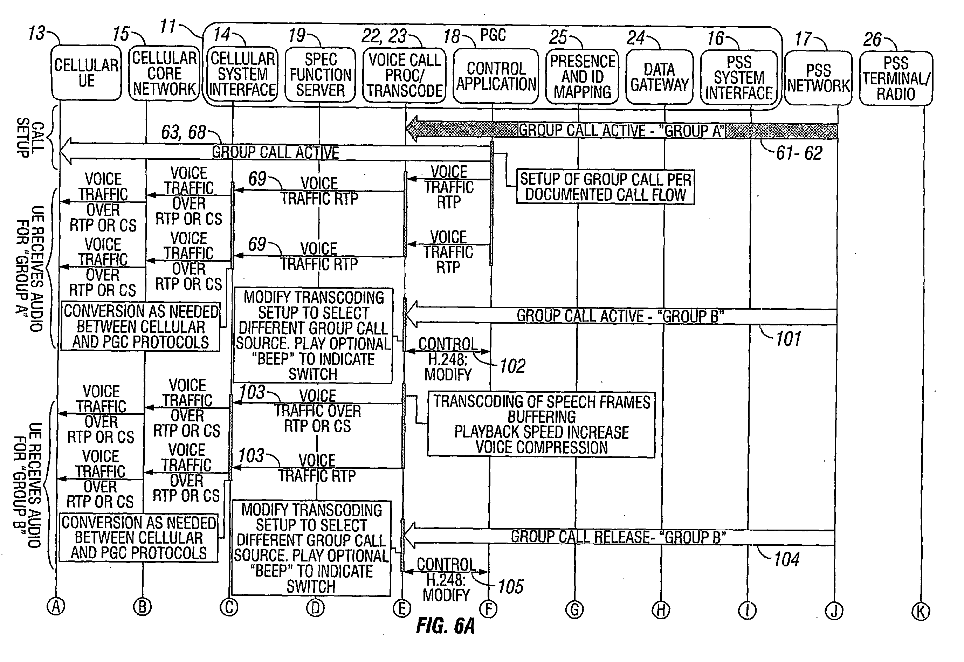

FIGS. 6A-6B are portions of an exemplary call flow diagram illustrating how a user on the Public Cellular Network can utilize the present invention to scan between Group Calls active on the PSS Network. Today all PSS systems require the PSS Terminal (or radio) 26 to perform all scanning functions. The PSS Terminal is responsible for monitoring control information sent from the PSS Network, and for moving between active group call transmissions. The PGC gateway 11 implements a different strategy in which a single session or transmission is created between the Cellular UE 13 and the PGC gateway, and switching of the group call message stream is performed at the PGC gateway. This significantly reduces call setup time at the UE, providing for a more efficient and faster scanning session.

Referring to FIG. 6A, in a first phase labeled call setup, group call setup is performed for Group-A in accordance with steps 61-68 of FIG. 4. Voice traffic 69 for Group-A is then forwarded to the Cellular UE 13, with the Cellular system interface 14 performing conversion as required between PGC and Cellular protocols. Thereafter, Group-B is activated at 101. Control signaling 102 between the Voice Call Processor/Transcoder 22/23 and the Control Application 18 causes the Voice Call Processor/Transcoder 22/23 to modify the transcoding setup in order to select a different group call source for Group-B. An optional audio indication such as a "beep" may be played for the benefit of the user to indicate the switch to the new group. Voice traffic 103 for Group-B is then forwarded to the Cellular UE, with the Cellular system interface performing conversion as required between PGC and Cellular protocols. The Voice Call Processor/Transcoder performs transcoding of speech frames, buffering, playback speed control, and voice compression.

Sometime thereafter, the PSS Network 17 sends a Group Call Release message 104 to release the group call for Group-B. Control signaling 105 between the Voice Call Processor/Transcoder 22/23 and the Control Application 18 causes the Voice Call Processor/Transcoder to modify the transcoding setup to select a different group call source (for example, for Group-A).

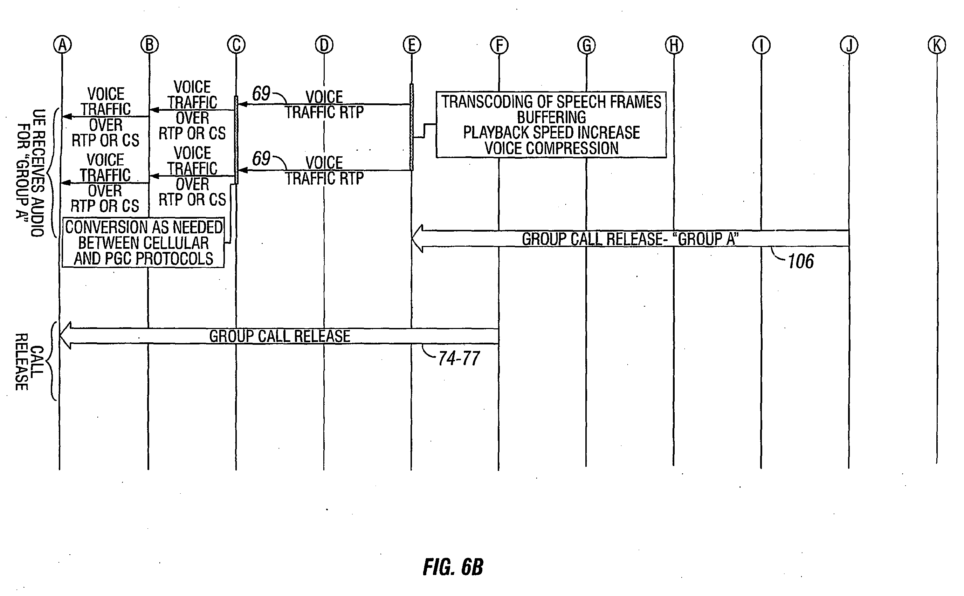

The process then moves to FIG. 6B, where voice traffic 69 for Group-A is then forwarded to the Cellular UE 13, with the Cellular system interface 14 performing conversion as required between PGC and Cellular protocols. Once again, the Voice Call Processor/Transcoder performs transcoding of speech frames, buffering, playback speed control, and voice compression. Sometime thereafter, the PSS Network 17 sends a Group Call Release message 106 to release the group call for Group-B. Group call release is then performed for Group-A in accordance with steps 74-77 of FIG. 4.

As would be clear to those skilled in the art, a similar process may be performed enabling a user on the PSS network to utilize the present invention to scan between Group Calls active on the Public Cellular Network.

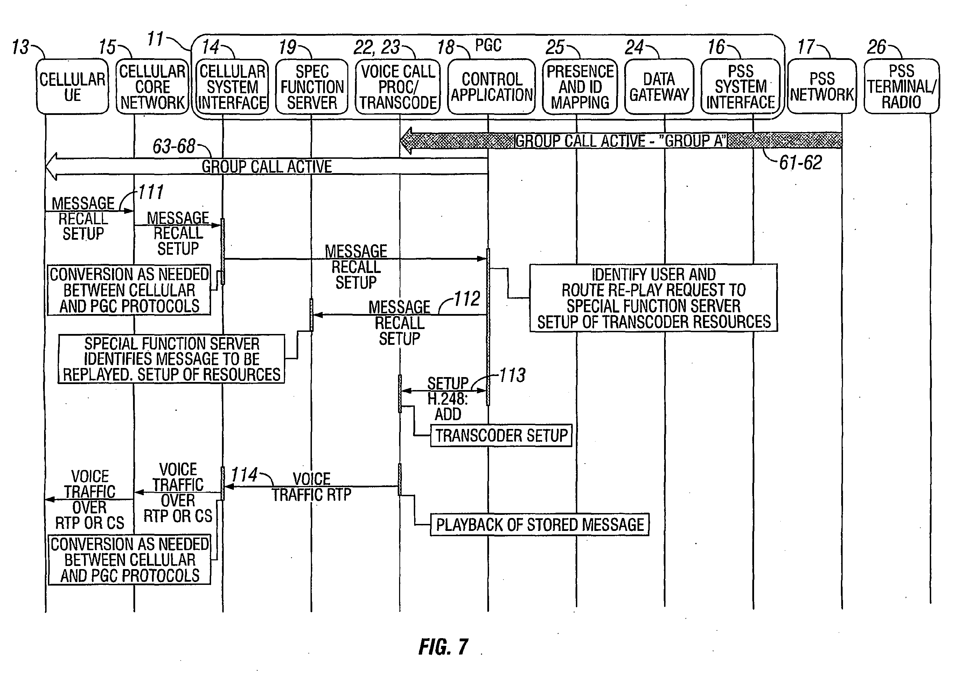

FIG. 7 is an exemplary call flow diagram illustrating a Message Replay feature provided by the PGC gateway 11. The PGC provides the ability for a user operating on the Public Cellular Network to request a repeat or retransmission of a previously sent transmission. The PGC stores a number of recently sent transmissions, and can replay them upon request to a UE on the Public Cellular Network.

In a first phase, group call setup is performed for Group-A in accordance with steps 61-68 of FIG. 4. At some later time, the Cellular UE 13 requests message recall setup at 111. The Message Recall Setup message is forwarded to the Control Application 18, which identifies the user and routes the replay request 112 to the Special Function Server 19. The Special Function Server identifies a stored message to be replayed and sets up resources. The Control Application also sends a Setup message 113 to the Voice Call Processor/Transcoder 22/23 to set up transcoder resources. The Voice Call Processor/Transcoder then plays back the stored message, and voice traffic 114 is forwarded to the Cellular UE via the Cellular system interface 14 and the Cellular Core Network 15.

As would be clear to those skilled in the art, a similar process may be performed enabling a user on the PSS Network to request a repeat or retransmission of a previously sent transmission.

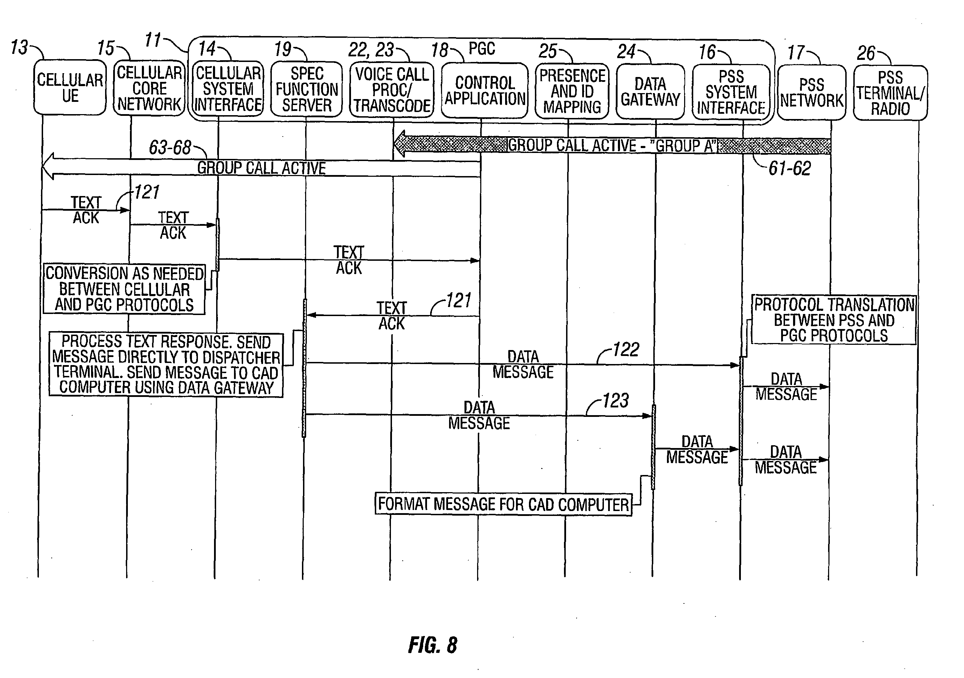

FIG. 8 is an exemplary call flow diagram illustrating a Text Acknowledge feature provided by the PGC gateway 11. The PGC provides the ability for a user operating on the Public Cellular Network to respond with a text acknowledgement to a voice transmission sent from a dispatcher operating on the PSS Network. In one example, a police officer may perform a "one button" acknowledgement to an assignment. Additionally, using the PGC Macro Function of the Specialized Function Server 19, multiple acknowledgements can be sent with a single transmission.

In a first phase, group call setup is performed for Group-A in accordance with steps 61-68 of FIG. 4. At some later time, the Cellular UE 13 sends a text acknowledgment at 121. The text acknowledgment is forwarded to the Control Application 18, which forwards it to the Specialized Function Server 19. The Specialized Function Server processes the text response, and may send the acknowledgment as a data message 122 directly to the Dispatch Console 12 in the PSS Network 17. Alternatively, the Specialized Function Server may send a data message 123 via the Data Gateway 24 to the Computer Aided Dispatch system 21 in the PSS Network.

As would be clear to those skilled in the art, a similar process may be performed enabling a user on the PSS Network to respond with a text acknowledgement to a voice transmission sent from a user operating on the Public Cellular Network.

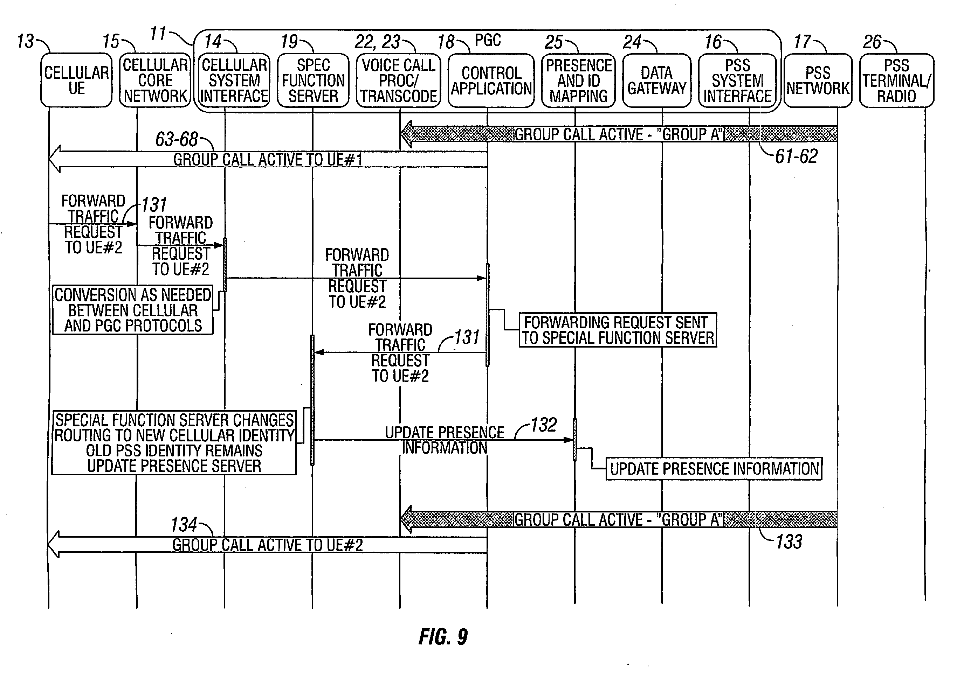

FIG. 9 is an exemplary call flow diagram illustrating a UE Forwarding feature provided by the PGC gateway 11. The PGC provides the ability for users operating on the Public Cellular Network to forward their voice and data traffic to another UE as desired. For example, a police officer may forward his voice and data traffic when he changes vehicles or assumes a different public safety role or task.

In a first phase, group call setup is performed for Group-A and a first Cellular UE (UE-1) in accordance with steps 61-68 of FIG. 4. At some later time, UE-1 sends a Forward Traffic Request 131 requesting voice and data traffic to be forwarded to a second Cellular UE (UE-2). The Forward Traffic Request is forwarded to the Control Application 18, which forwards it to the Specialized Function Server 19. The Specialized Function Server changes the routing of UE-1's voice and data to UE-2. UE-1's old PSS identity remains unchanged. At 132, the Specialized Function Server updates the presence information in the Presence and ID Mapping Unit 25. When voice or data for UE-1 is received from the PSS Network 17 at 133, the voice and data are forwarded at 134 to UE-2.

As would be clear to those skilled in the art, a similar process may be performed enabling users operating on the PSS Network to forward their voice and data traffic to another PSS terminal as desired.

Although preferred embodiments of the present invention have been illustrated in the accompanying drawings and described in the foregoing Detailed Description, it is understood that the invention is not limited to the embodiments disclosed, but is capable of numerous rearrangements, modifications, and substitutions without departing from the scope of the invention. The specification contemplates any all modifications that fall within the scope of the invention defined by the following claims.

## Claims

1. A gateway (11) for interfacing a Public Safety and Security (PSS) communication system (17, 26) with a cellular communication system (13, 15), said gateway (11) comprising:
a PSS system interface (16) for interfacing the gateway (11) with the PSS communication system (17, 26);
a cellular interface (14) for interfacing the gateway (11) with the cellular communication system (13, 15);
a presence and identity mapping unit (25) for mapping a PSS user identity utilized in the PSS communication system (17, 26) to a cellular user identity utilized in the cellular communication system (13, 15);
call processing means (23) for utilizing the mapped cellular user identity to establish a session between the PSS communication system (17, 26) and a PSS user operating in the cellular communication system (13, 15), wherein the call processing means (23) includes means for processing voice calls between a PSS user operating in the cellular communication system (13, 15) and the PSS communication system (17, 26), wherein the voice call processing means (23) is adapted to buffer incoming voice frames if one of the communication systems completes call setup before the other communication system completes call setup; and
a transcoder (22) for converting between cellular protocols and PSS protocols.

2. The gateway (11) according to claim 1, wherein the means (23) for processing voice calls includes means for storing a plurality of recently transmitted voice transmissions and retransmitting the stored voice transmissions upon demand.

3. The gateway (11) according to claim 1, wherein the means (23) for processing voice calls includes compression means for compressing a voice transmission in the time domain to allow voice traffic being passed over a slower-setup communication system to catch-up during replay at a destination user equipment.

4. The gateway (11) according to claim 1, wherein the means (23) for processing voice calls includes means for processing group voice calls (23) between a PSS user operating in the cellular communication system (13, 15) and a group of PSS users in the PSS communication system (17, 26).

5. The gateway (11) according to claim 4, wherein the means (23) for processing group voice calls includes means for switching a voice stream from a first voice group to a second voice group without incurring additional call release and call-setup delays.

6. The gateway (11) according to claim 1, wherein the call processing means (23) includes means for forwarding a PSS-originated voice or data call from a first cellular user equipment (UE) to a second UE operating in the cellular communication system (13, 15).

7. The gateway (11) according to claim 1, wherein the call processing means (23) includes a data gateway interfaced with a PSS data server in the PSS communication system (17, 26), said data gateway for processing data calls between the PSS data server and the PSS user operating in the cellular communication system (13, 15).

8. The gateway (11) according to claim 7, wherein the data gateway includes means for translating between PSS data protocols and cellular data protocols.

9. The gateway (11) according to claim 8, wherein the data gateway is adapted to provide protocol translations between a cellular user equipment (UE) and a PSS data server selected from a group consisting of:
a dispatch console:
a 9-1-1 call center server; and
a PSS Computer Aided Dispatch (CAD) logging computer.

10. The gateway (11) according to claim 1, wherein the call processing means (23) includes means for dynamically switching between voice and data transmissions sent between the PSS communication system (17, 26) and the PPS user operating in the cellular communication system (13, 15).

11. The gateway (11) according to claim 1, wherein the call processing means (23) includes means for establishing sessions between the PSS communication system (17, 26) and PSS users operating in both circuit-switched and packet-switched cellular communication systems.

12. A method of interfacing a Public Safety and Security (PSS) communication system (17, 26) with a cellular communication system (13, 15) through a gateway (11), said method comprising:
interfacing the gateway (11) with the PSS communication system (17, 26);
interfacing the gateway (11) with the cellular communication system (13, 15);
mapping by the gateway (11), a PSS user identity utilized in the PSS communication system (17, 26) to a cellular user identity utilized in the cellular communication system (13, 15);
establishing by the gateway (11), a session between the PSS communication system (17, 26) and a PSS user operating in the cellular communication system (13, 15) utilizing the mapped cellular user identity;
transporting voice traffic between the PSS communication system (17, 26) and the PSS user operating in the cellular communication system (13, 15), wherein the gateway (11) converts between PSS and cellular voice coding protocols; and
buffering incoming voice frames if one of the communication systems completes call setup before the other communication system completes call setup.

13. The method according to claim 12, further comprising transporting data between the PSS communication system (17, 26) and the PSS user operating in the cellular communication system (13, 15), wherein the gateway (11) converts between PSS data protocols and cellular data protocols.

14. The method according to claim 12, wherein the step of transporting voice traffic includes selectively converting between PSS voice coding protocols and either circuit-switched or packet-switched cellular voice coding protocols, depending on the type of cellular communication system (13, 15) where the PSS user is located.

15. A system for providing seamless communications to Public Safety and Security (PSS) users operating between a PSS communication network (17, 26) and a cellular communication network (13, 15) irrespective of access technology or switching method, said system comprising:
a PSS communication network (17, 26);
a cellular communication network (13, 15); and
a gateway (11) for interfacing the PSS communication network (17, 26) with the cellular communication network (13, 15), said gateway (11) comprising:
a PSS interface (16) for interfacing the gateway (11) with the PSS communication network (17, 26);
a cellular interface (14) for interfacing the gateway (11) with the cellular communication network (13, 15);
a presence and identity mapping unit (25) for mapping a PSS user identity utilized in the PSS communication network (17, 26) to a cellular user identity utilized in the cellular communication network (13, 15):
call processing means (23) for utilizing the mapped cellular user identity to establish a session between the PSS communication system (17, 26) and a PSS user operating in the cellular communication system (13, 15), wherein the call processing means (23) includes means for processing voice calls between a PSS user operating in the cellular communication system (13, 15) and the PSS communication system (17, 26), wherein the voice call processing means (23) is adapted to buffer incoming voice frames if one of the communication systems completes call setup before the other communication system completes call setup; and
a transcoder (22) for converting between cellular protocols and PSS protocols.

16. The system according to claim 15, wherein the transcoder (22) includes means for converting between PSS voice coding protocols and cellular voice coding protocols.

## Patentansprüche

1. Ein Gateway (11) zum Bilden einer Schnittstelle zwischen einem Öffentliche-Sicherheit- und Sicherheit-(PSS, Public Safety and Security)-Kommunikationssystem (17, 26) und einem Zellularkommunikationssystem (13, 15), wobei der Gateway (11) umfasst:
eine PSS-System-Schnittstelle (16) zum Bilden einer Schnittsstelle zwischen dem Gateway (11) und dem PSS-Kommunikationssystem (17, 26);
eine Zellularschnittstelle (14) zum Bilden einer Schnittstelle zwischen dem Gateway (11) und dem Zellularkommunikationssystem (13, 15);
eine Anwesendheits- und Identitätsabbildungseinheit (25) zum Abbilden einer PSS-Benutzeridentität, die verwendet wird in dem PSS-Kommunikationssystem (17, 26) auf eine Zellularbenutzeridentität, die verwendet wird in dem Zellularkommunikationssystem (13, 15);
Anrufverarbeitungsmittel (23) zum Verwenden der abgebildeten Zellularbenutzeridentität zum Einrichten einer Session zwischen dem PSS-Kommunikationssystem (17, 26) und einem PSS-Benutzer, der in dem Zellularkommunikationssystem arbeitet (13, 15), wobei das Anrufverarbeitungsmittel (23) Mittel zum Verarbeiten von Sprachanrufen enthält zwischen einem PSS-Benutzer, der in dem Zellularkommunikationssystem (13, 15) und dem PSS-Kommunikationssystem (17, 26) arbeitet, wobei das Sprachanruf-Verarbeitungsmittel (23) ausgebildet ist zum Zwischenspeichern von ankommenden Sprachrahmen, falls eines der Kommunikationssysteme eine Anrufeinrichtung beendet, bevor das andere Kommunikationssystem eine Anrufeinrichtung beendet; und
einen Transcoder (22) zum Umwandeln zwischen Zellularprotokollen und PSS-Protokollen.

2. Der Gateway (11) nach Anspruch 1, wobei das Mittel (23) zum Verarbeiten von Sprachanrufen Mittel enthält zum Speichern einer Vielzahl von neulich übertragenen Sprachübertragungen und Neuübertragen der gespeicherten Sprachübertragungen auf Nachfrage.

3. Der Gateway (11) nach Anspruch 1, wobei das Mittel (23) zum Verarbeiten von Sprachanrufen Kompressionsmittel enthält zum Komprimieren einer Sprachübertragung in der Zeitdomäne zum Erlauben eines Sprachverkehrs, der über ein langsamer eingerichtetes Kommunikationssystem geht, um Anschluss zu finden während einer Wiederholung bei einem Endbenutzergerät.

4. Der Gateway (11) nach Anspruch 1, wobei das Mittel (23) zum Verarbeiten von Sprachanrufen Mittel enthält zum Verarbeiten von Gruppensprachanrufen (23) zwischen einem PSS-Benutzer, der in dem Zellularkommunikationssystem (13, 15) arbeitet, und einer Gruppe von PSS-Benutzer in dem PSS-Kommunikationssystem (17, 26).

5. Der Gateway (11) nach Anspruch 4, wobei das Mittel (23) zum Verarbeiten von Gruppensprachanrufen Mittel enthält zum Umschalten eines Sprachstroms von einer ersten Sprachgruppe zu einer zweiten Sprachgruppe, ohne dass eine zusätzliche Anruffreigabe und Anrufeinrichtungsverzögerungen auftreten.

6. Der Gateway (11) nach Anspruch 1, wobei das Anrufverarbeitungsmittel (23) Mittel enthält zum Weiterleiten einer PSS-beursprungten Sprache oder Datenanruf von einem ersten Zellularbenutzergerät (UE) zu einem zweiten UE, das in dem Zellularkommunikationssystem (13, 15) arbeitet.

7. Der Gateway (11) nach Anspruch 1, wobei das Anrufverarbeitungsmittel (23) einen Daten-Gateway enthält, der über Schnittstelle verbunden ist mit einem PSS-Datenserver in dem PSS-Kommunikationssystem (17, 26), der Daten-Gateway vorgesehen ist zum Verarbeiten von Datenanrufen zwischen dem PSS-Datenserver und dem PSS-Benutzer, der in dem Zellularkommunikationssystem (13, 15) arbeitet.

8. Der Gateway (11) nach Anspruch 7, wobei der Daten-Gateway Mittel enthält zum Übersetzen zwischen PSS-Datenprotokollen und Zellular-Datenprotokollen.

9. Der Gateway (11) nach Anspruch 8, wobei der Daten-Gateway ausgebildet ist zum Bereitstellen von Protokollübersetzungen zwischen einem Zellularbenutzergerät (UE) und einem PSS-Datenserver, ausgewählt von einer Gruppe bestehend aus:
einem Absendegerät;
einem 9-1-1-Call-Center-Server; und
einem PSS-Computer-gestützten Absende-(CAD)-Log-Computer.

10. Der Gateway (11) nach Anspruch 1, wobei das Anrufverarbeitungsmittel (23) Mittel enthält zum dynamischen Umschalten zwischen Sprach- und Datenübertragungen, die gesendet werden zwischen dem PSS-Kommunikationssystem (17, 26) und dem PPS-Benutzer, der in dem Zellularkommunikationssystem (13, 15) arbeitet.

11. Der Gateway (11) nach Anspruch 1, wobei das Anrufverarbeitungsmittel (23) Mittel enthält zum Einrichten einer Session zwischen dem PSS-Kommunikationssystem (17, 26) und PSS-Benutzern, die sowohl im leitungsvermittelten als auch dem paketvermittelten Zellularkommunikationssystem arbeiten.

12. Ein Verfahren zum Bilden einer Schnittstelle zwischen einem Öffentliche-Sicherheit- und Sicherheit-(PSS, Public Safety and Security)-Kommunikationssystem (17, 26) und einem Zellularkommunikationssystem (13, 15) durch einen Gateway (11), wobei das Verfahren umfasst:
Über-Schnittstelle-Verbinden des Gateways (11) mit dem PSS-Kommunikationssystem (17, 26);
Über-Schnittstelle-Verbinden des Gateways (11) mit dem Zellularkommunikationssystem (13, 15);
Abbilden durch den Gateway (11) einer PSS-Benutzeridentität, die verwendet wird in dem PSS-Kommunikationssystem (17, 26) auf eine Zellularbenutzeridentität, die verwendet wird in dem Zellularkommunikationssystem (13, 15);
Einrichten durch den Gateway (11) einer Session zwischen dem PSS-Kommunikationssystem (17, 26) und einem PSS-Benutzer, der in dem Zellularkommunikationssystem (13, 15) arbeitet, wobei die abgebildete Zellularbenutzeridentität verwendet wird;
Transportieren von Sprachverkehr zwischen dem PSS-Kommunikationssystem (17, 26) und dem PSS-Benutzer, der in dem Zellularkommunikationssystem (13, 15) arbeitet, wobei der Gateway (11) zwischen PSS und Zellularsprachcodier-Protokollen umwandelt;
Zwischenspeichern von ankommenden Sprachrahmen, falls eines der Kommunikationssysteme ein Anrufeinrichten beendet bevor das andere Kommunikationssystem ein Anrufeinrichten beendet.

13. Das Verfahren nach Anspruch 12, ferner umfassend Transportieren von Daten zwischen dem PSS-Kommunikationssystem (17, 26) und dem PSS-Benutzer, der in dem Zellularkommunikationssystem (13, 15) arbeitet, wobei der Gateway (11) zwischen PSS-Datenprotokollen und Zellulardatenprotokollen umwandelt.

14. Das Verfahren nach Anspruch 12, wobei der Schritt eines Transportierens von Sprachverkehr ein selektives Umwandeln enthält zwischen PSS-Sprachcodier-Protokollen und entweder leitungsvermittelten oder paketvermittelten Zellularsprachcodier-Protokollen, abhängig von der Art des Zellularkommunikationssystems (13, 15), wo der PSS-Benutzer lokalisiert wird.

15. Ein System zum Bereitstellen übergangsloser Kommunikation bei Öffentliche-Sicherheit- und Sicherheit-(PSS, Public Safety and Security)-Benutzern, die zwischen einem PSS-Kommunikationsnetzwerk (17, 26) und einem Zellularkommunikationsnetzwerk (13, 15) arbeiten unabhängig von einer Zugangstechnologie oder Schalt- bzw. Vermittlungsverfahren, wobei das System umfasst:
ein PSS-Kommunikationsnetzwerk (17, 26);
ein Zellularkommunikationsnetzwerk (13, 15); und
ein Gateway (11) zum Über-Schnittstelle-Verbinden des PSS-Kommunikationsnetzwerks (17, 26) mit dem Zellularkommunikationsnetzwerk (13, 15), wobei der Gateway (11) umfasst:
eine PSS-Schnittstelle (16) zum Über-Schnittstelle-Verbinden des Gateways (11) mit dem PSS-Kommunikationsnetzwerk (17, 26);
eine Zellularschnittstelle (14) zum Über-Schnittstelle-Verbinden des Gateways (11) mit dem Zellularkommunikationsnetzwerk (13, 15);
eine Anwesendheits- und Identitätsabbildungseinheit (25) zum Abbilden einer PSS-Benutzeridentität, die verwendet wird in dem PSS-Kommunikationsnetzwerk (17, 26) auf eine Zellularbenutzeridentität, die verwendet wird in dem Zellularkommunikationsnetzwerk (13, 15):
Anrufverarbeitungsmittel (23) zum Verwenden der abgebildeten Zellularbenutzeridentität zum Einrichten einer Session zwischen dem PSS-Kommunikationssystem (17, 26) und einem PSS-Benutzer, der in dem Zellularkommunikationssystem (13, 15) arbeitet, wobei das Anrufverarbeitungsmittel (23) ein Mittel enthält zum Verarbeiten von Sprachanrufen zwischen einem PSS-Benutzer, der in dem Zellularkommunikationssystem (13, 15) arbeitet, und dem PSS-Kommunikationssystem (17, 26), wobei das Sprachanrufverarbeitungsmittel (23) ausgebildet ist zum Zwischenspeichern ankommender Sprachrahmen, falls eines der Kommunikationssysteme ein Anrufeinrichten beendet, bevor das andere Kommunikationssystem ein Anrufeinrichten beendet; und
einen Transcoder (22) zum Umwandeln zwischen Zellularprotokollen und PSS-Protokollen.

16. Das System nach Anspruch 15, wobei der Transcoder (22) Mittel enthält zum Umwandeln zwischen PSS-Sprachcodier-Protokollen und Zellularsprachcodier-Protokollen.

## Revendications

1. Passerelle (11) destinée à interfacer un système de communication PSS (pour « *Public Safety and Security* » - Sûreté et sécurité publiques) (17, 26) avec un système de communication cellulaire (13, 15), ladite passerelle (11) comprenant :
une interface de système PSS (16) destinée à interfacer la passerelle (11) avec le système de communication PSS (17, 26) ;
une interface cellulaire (14) destinée à interfacer la passerelle (11) avec le système de communication cellulaire (13, 15) ;
une unité de mappage de présences et d'identités (25), destinée à faire correspondre une identité d'utilisateur PSS utilisée sur le système de communication PSS (17, 26) avec une identité d'utilisateur cellulaire utilisée sur le système de communication cellulaire (13, 15) ;
un moyen de traitement d'appels (23) destiné à utiliser l'identité d'utilisateur cellulaire mise en correspondance pour établir une session entre le système de communication PSS (17, 26) et un utilisateur PSS fonctionnant sur le système de communication cellulaire (13, 15), le moyen de traitement d'appels (23) comprenant un moyen destiné à traiter des appels vocaux entre un utilisateur PSS fonctionnant sur le système de communication cellulaire (13, 15) et le système de communication PSS (17, 26), le moyen de traitement d'appels vocaux (23) étant conçu pour mettre en mémoire tampon des trames vocales entrantes si l'un des systèmes de communication achève l'établissement de l'appel avant que l'autre système de communication n'achève l'établissement de l'appel ; et
un transcodeur (22) destiné à effectuer la conversion entre les protocoles cellulaires et les protocoles PSS.

2. Passerelle (11) selon la revendication 1, dans laquelle le moyen (23) destiné à traiter les appels vocaux comprend un moyen destiné à enregistrer une pluralité d'émissions vocales émises récemment et à réémettre les émissions vocales enregistrées à la demande.

3. Passerelle (11) selon la revendication 1, dans laquelle le moyen (23) destiné à traiter les appels vocaux comprend un moyen de compression destiné à comprimer une émission vocale dans le domaine temporel afin de permettre au trafic vocal transporté sur un système de communication plus lent de rattraper le temps perdu, pendant la reproduction sur un équipement d'utilisateur de destination.

4. Passerelle (11) selon la revendication 1, dans laquelle le moyen (23) destiné à traiter les appels vocaux comprend un moyen destiné à traiter des appels vocaux de groupe (23) entre un utilisateur PSS fonctionnant sur le système de communication cellulaire (13, 15) et un groupe d'utilisateurs PSS sur le système de communication PSS (17, 26).

5. Passerelle (11) selon la revendication 4, dans laquelle le moyen (23) destiné à traiter les appels vocaux comprend un moyen destiné à commuter un flux vocal entre un premier groupe vocal et un second groupe vocal sans subir de retards supplémentaires de libération de l'appel et d'établissement de l'appel.

6. Passerelle (11) selon la revendication 1, dans laquelle le moyen de traitement d'appels (23) comprend un moyen destiné à acheminer un appel vocal ou de données d'origine PSS entre un premier équipement d'utilisateur cellulaire et un second équipement d'utilisateur fonctionnant sur le système de communication cellulaire (13, 15).

7. Passerelle (11) selon la revendication 1, dans laquelle le moyen de traitement d'appels (23) comprend une passerelle de données interfacée avec un serveur de données PSS sur le système de communication PSS (17, 26), ladite passerelle de données étant destinée à traiter des appels de données entre le serveur de données PSS et l'utilisateur PSS fonctionnant sur le système de communication cellulaire (13, 15).

8. Passerelle (11) selon la revendication 7, dans laquelle la passerelle de données comprend un moyen destiné à assurer la traduction entre les protocoles de données PSS et les protocoles de données cellulaires.

9. Passerelle (11) selon la revendication 8, dans laquelle la passerelle de données est conçue pour fournir des traductions de protocoles entre un équipement d'utilisateur cellulaire et un serveur de données PSS sélectionné dans un groupe composé de :
une console d'ordonnancement ;
un serveur de centre d'appels 911 ; et
un ordinateur de journalisation d'ordonnancement assisté par ordinateur PSS.

10. Passerelle (11) selon la revendication 1, dans laquelle le moyen de traitement d'appels (23) comprend un moyen destiné à commuter dynamiquement entre des émissions de voix et de données qui sont envoyées entre le système de communication PSS (17, 26) et l'utilisateur PSS fonctionnant sur le système de communication cellulaire (13, 15).

11. Passerelle (11) selon la revendication 1, dans laquelle le moyen de traitement d'appels (23) comprend un moyen destiné à établir des sessions entre le système de communication PSS (17, 26) et des utilisateurs PSS fonctionnant sur des systèmes de communication cellulaires à la fois à commutation de circuits et à commutation de paquets.

12. Procédé d'interfaçage d'un système de communication PSS (17, 26) et d'un système de communication cellulaire (13, 15) à l'aide d'une passerelle (11), ledit procédé comprenant les étapes consistant à :
interfacer la passerelle (11) avec le système de communication PSS (17, 26) ;
interfacer la passerelle (11) avec le système de communication cellulaire (13, 15) ;
sur la passerelle (11), mettre en correspondance une identité d'utilisateur PSS utilisée sur le système de communication PSS (17, 26) et une identité d'utilisateur cellulaire utilisée sur le système de communication cellulaire (13, 15) ;
sur la passerelle (11), établir une session entre le système de communication PSS (17, 26) et un utilisateur PSS fonctionnant sur le système de communication cellulaire (13, 15) à l'aide de l'identité d'utilisateur cellulaire mise en correspondance ;
transporter du trafic vocal entre le système de communication PSS (17, 26) et l'utilisateur PSS fonctionnant sur le système de communication cellulaire (13, 15), la passerelle (11) effectuant la conversion entre les protocoles de codage vocal PSS et cellulaire ; et
mettre en mémoire tampon des trames vocales entrantes si l'un des systèmes de communication achève l'établissement de l'appel avant que l'autre système de communication n'achève l'établissement de l'appel.

13. Procédé selon la revendication 12, comprenant en outre l'étape consistant à transporter des données entre le système de communication PSS (17, 26) et l'utilisateur PSS fonctionnant sur le système de communication cellulaire (13, 15), la passerelle (11) effectuant la conversion entre les protocoles de données PSS et les protocoles de données cellulaires.

14. Procédé selon la revendication 12, dans lequel l'étape de transport de trafic vocal comprend l'étape consistant à convertir sélectivement entre des protocoles de codage vocal PSS et des protocoles de codage vocal cellulaires, soit à commutation de circuits, soit à commutation de paquets, suivant le type de système de communication cellulaire (13, 15) où se situe l'utilisateur PSS.

15. Système destiné à fournir des communications sans solution de continuité à des utilisateurs PSS fonctionnant entre un réseau de communication PSS (17, 26) et un réseau de communication cellulaire (13, 15), quels que soient la technologie d'accès et le procédé de commutation, ledit système comprenant :
un réseau de communication PSS (17, 26) ;
un réseau de communication cellulaire (13, 15) ; et
une passerelle (11) destinée à interfacer le réseau de communication PSS (17, 26) avec le réseau de communication cellulaire (13, 15), ladite passerelle (11) comprenant :
une interface PSS (16) destinée à interfacer la passerelle (11) avec le réseau de communication PSS (17, 26) ;
une interface cellulaire (14) destinée à interfacer la passerelle (11) avec le réseau de communication cellulaire (13, 15) ;
une unité de mappage de présences et d'identités (25), destinée à faire correspondre une identité d'utilisateur PSS utilisée sur le réseau de communication PSS (17, 26) avec une identité d'utilisateur cellulaire utilisée sur le réseau de communication cellulaire (13, 15) ;
un moyen de traitement d'appels (23) destiné à utiliser l'identité d'utilisateur cellulaire mise en correspondance pour établir une session entre le système de communication PSS (17, 26) et un utilisateur PSS fonctionnant sur le système de communication cellulaire (13, 15), le moyen de traitement d'appels (23) comprenant un moyen destiné à traiter des appels vocaux entre un utilisateur PSS fonctionnant sur le système de communication cellulaire (13, 15) et le système de communication PSS (17, 26), le moyen de traitement d'appels vocaux (23) étant conçu pour mettre en mémoire tampon des trames vocales entrantes si l'un des systèmes de communication achève l'établissement de l'appel avant que l'autre système de communication n'achève l'établissement de l'appel ; et
un transcodeur (22) destiné à effectuer la conversion entre les protocoles cellulaires et les protocoles PSS.

16. Système selon la revendication 15, dans lequel le transcodeur (22) comprend un moyen destiné à effectuer la conversion entre des protocoles de codage vocal PSS et des protocoles de codage vocal cellulaires.
